# EUROPÄISCHE PATENTSCHRIFT

(11) **EP 0 694 701 B1**
(45) Veröffentlichungstag und Bekanntmachung des Hinweises auf die Patenterteilung: **23.12.1998**
(21) Anmeldenummer: 95810454.9
(22) Anmeldetag: 11.07.1995
(51) Int. Cl.: F16B 7/18, E04B 2/76, B62D 33/04

(54) **Verbindungselement**
Fastening device
Dispositif de fixation

(30) Priorität: 25.07.1994 CH 2335/94
(43) Veröffentlichungstag der Anmeldung: 31.01.1996
(73) Patentinhaber: Alusuisse Technology & Management AG, 8212 Neuhausen am Rheinfall (CH)
(72) Erfinder: Röllin, Ulrich, CH-8048 Zürich (CH); Kreuzwirth, Peter, CH-8957 Spreitenbach (CH)

(56) Entgegenhaltungen:
- EP-A- 0 136 264
- CH-A- 627 982
- DE-A- 3 823 941
- FR-A- 2 641 809
- GB-A- 919 135

## Beschreibung

Vorliegende Erfindung betrifft eine Verbindung von zwei in einem Winkel stehenden Längsprofilen entsprechend dem Oberbegriff des Anspruches 1 und ein Verfahren zur Herstellung einer solchen Verbindung, sowie deren Verwendung.

Verbindungen der genannten Art werden beispielsweise für den Zusammenbau von Gerippestrukturen für Wagenkasten von beispielsweise Schienen- oder Strassenfahrzeugen eingesetzt. Die Strukturbauteile bestehen üblicherweise aus Profilen aus Stahl, Aluminium oder Kunststoff, welche beispielsweise mit verformten Stahl- oder Aluminiumblechen oder Panelen aus Kunststoff oder gegebenenfalls mit Kunststoff- oder Glassegmenten ergänzt werden. Insbesondere bestehen solche Strukturbauteile aus stranggepressten Aluminium-, Kunststoff- oder Stahlprofilen.

Form- und/oder Reibschlussverbindungen zum Fügen von beispielsweise Leichtmetallprofilen sind an sich bekannt. Aus der CH 627 982 oder der EP-A-0 136 264 sind auf Reibschluss basierende Verbindungen von Metallprofilen mittels Eckverbindungsstücken, insbesondere für den Zusammenbau von Gerippestrukturen für Wagenkasten von Strassen- und Schienenfahrzeugen bekannt. Das dabei beschriebene Eckverbindungsstück weist federartige Anformungen auf, welche in hinterschnittene Nuten der Metallprofile geführt und durch Schraubverbindungen festgelegt werden. Die Schraubverbindungen enthalten Klemmstücke, welche in die hinterschnittenen Nuten der Metallprofile eingesetzt und sodann in die Hinterschneidungen eingeschwenkt werden. Zur Verbesserung der Reibschlussverbindung weisen die Klemmstücke gemäss der EP-A-0 136 264 eine Zahnung auf, mit welcher die Klemmstücke beim Festlegen des Eckverbindungsstückes den Hinterschneidungen anliegen.

Bei den in der CH 627 982 oder EP-A-0 136 264 beschriebenen Verbindungen geschieht die Kraftübertragung von einem Profil auf das andere im wesentlichen über die Eckwinkel, was speziell bei dünnwandigen Profilen oft keine optimale Kraftübertragung gewährleistet. Zudem wird in vielen Anwendungen ein in Längsrichtung profiliertes Profil in Verbindung mit einem quergeschnittenen Profil zusammengefügt. Bei solchen Profilverbindungen ist eine saubere Trennlinie beim quergeschnittenen Profil erforderlich. Die Nachbearbeitung der quergeschnittenen Profilstirnseite ist aufwendig und teuer. Ferner können dünnwandige Profile schlecht abgedichtet werden, da beispielsweise ein Verkitten mit einer Dichtmasse aufgrund des fehlenden Anschlags nicht möglich ist.

In der DE,A, 38 23 941, der GB,A, 919 135 und der FR,A, 2 641 809 werden Knotenverbindungen zweier als Hohlprofile ausgebildeter Längsprofile mit rechteckförmigen Querschnitten beschrieben, wobei das eine, erste Profil mit einer seiner Stirnseiten auf eine Längsseite des anderen, zweiten Profils aufgesetzt wird. Dabei wird jeweils ein quaderförmiges Passstück in Hinterschneidungen an einer Aussenseite des zweiten Profils eingeschoben und das erste Profil mit einer seiner Stirnseiten über das quaderförmige Passstück gestülpt, so dass das Passstück in den stirnseitigen Hohlraum des ersten Hohlprofils greift. Die Kraftübertragung von einem Profil auf das andere erfolgt bei diesen bekannten Verbindungen im wesentlichen immer über die Profil-Aussenebenen.

Um ein Weggleiten des ersten Profils in achsialer Richtung zu verhindern, weist die Verbindung gemäss der DE,A, 38 23 941 Verformungen der Profilwände auf, welche in Ausnehmungen der Passstücke eingreifen. Bei Verbindungen gemäss der GB,A, 919 135 und der FR,A, 2 641 809 wird derselbe Effekt durch einen Reibschluss, durch Verschweissen oder durch Verschrauben des ersten Profils mit dem Passstück erreicht.

Für das Fügen der Stirnseite eines Längsprofiles mit beispielsweise kleinem Hohlprofilquerschnitt mit der Längsseite eines weiteren Längsprofiles eignen sich die aus dem Stand der Technik bekannten Verbindungen nicht, da die mechanische Stabilität einer derartigen Verbindung üblicherweise zu gering ist. Zudem liegt bei den aus dem Stand der Technik bekannten Verbindungen die Stirnseite des einen Längsprofils jeweils vollflächig auf einer Längsseite des zweiten Längsprofiles auf, so dass solche Verbindungen zur Aufnahme grosser Kräfte eine hohe Oberflächengüte der zu fügenden Flächen bedingen.

Aufgabe vorliegender Erfindung ist die Schaffung einer Verbindung zweier in einem Winkel stehender Längsprofile, welche die Nachteile der aus dem Stand der Technik bekannten Profilverbindungen vermeidet und dengegenüber insbesondere eine höhere mechanische Stabilität aufweist.

Erfindungsgemäss wird dies dadurch erreicht, dass das erste Längsprofil an seiner Stirntläche eine stirnseitige Ausnehmung aufweist und in diese ein in die nutartige Vertiefung zwischen den Längsflanschen des zweiten Längsprofils eingeführtes Verbindungselement greift, wobei das Verbindungselement zusammen mit der stirnseitigen Ausnehmung eine formschlüssige Verbindung bildet.

Das Verbindungselement kommt zwischen die Stirnfläche des ersten Längsprofils und einer Verbindungsseite des zweiten Längsprofils zu liegen, wobei das Verbindungselement eine positiv geformte Profilkonfiguration zeigt und das erste Längsprofil eine stirnseitige Ausnehmung mit einer negativ geformten Profilkonfiguration aufweist. Die positiv geformte Profilkonfiguration des Verbindungselementes und die durch die stirnseitige Ausnehmung definierte, negativ geformte Profilkonfiguration des ersten Längsprofils ergänzen sich zu einer formschlüssigen Verbindung, wodurch die Kraftübertragung von einem Profil auf das andere über die Profil-Aussenebenen und über den inneren, stirnförmigen Profilbereich des ersten Längsprofils erfolgt. Zudem werden durch die erfindungsgemässe Verbindung Fertigungstoleranzen der aufeinanderstossenden Flächen ausgeglichen, wodurch die Herstellung von dichten Verbindungen ermöglicht wird.

Die zu verbindenden Längsprofile bestehen üblicherweise aus Stahl, Kunststoff oder Leichtmetallen wie beispielsweise Aluminium oder seine Legierungen. Bevorzugt werden vorliegende Verbindungen zum Fügen von stranggepressten Profilen aus Aluminium oder seinen Legierungen verwendet

Die erfindungsgemässe Verbindung eignet sich für Längsprofile, die auf wenigstens einer Profilseite -- der sogenannten Verbindungsseite -- eine beidseits hinterschnittene Nut mit einer Längsöffnung und beidseits der hinterschnittenen Nut einen angeformten Längsflansch aufweisen. Die durch die hinterschnittene Nut und die angeformten Längsflansche bestimmte längliche Vertiefung der Längsprofile wird im folgenden als nutartige Vertiefung bezeichnet. Im weiteren werden die an die Verbindungsseiten anliegenden Profilseiten als Wandseiten bezeichnet

In einer einfachen Ausführungsform der Längsprofile sind die Längsflansche als Teile der Wandseiten ausgebildet, wobei durch die Hinterschneidungen der hinterschnittenen Nut Profillappen gebildet werden. In einem Abstand zu den Profillappen können Profilstege angeordnet sein, welche die hinterschnittene Nut auf der den Profillappen abgewandten Seite räumlich begrenzen.

Bevorzugt werden Längsprofile mit gleichen Querschnittsabmessungen miteinander verbunden. Für die erfindungsgemässe Verbindung werden insbesondere Längsprofile bevorzugt, deren an die hinterschnittene Nut angeformten Längsflansche auf der Verbindungsseite/n denselben Abstand aufweisen. Bei einfachen Längsprofilen, bei denen die Längsflansche als Teil der Wandseiten gebildet werden, entspricht die Forderung gleicher Längsflansch-Abstände der Bedingung gleicher Wandseiten-Abstände.

Für die erfindungsgemässe Verbindung können die zu verbindenden Längsprofile einen rechten Winkel (T-Stoss) oder einen beliebig vorgegebenen spitzen Winkel (Schrägstoss) einschliessen. Bevorzugt wird jedoch das Verbinden von zwei in einem rechten Winkel stehenden Längsprofilen. Werden die zu verbindenden Längsprofile in einem Schrägstoss angeordnet, wird die Stirnfläche des ersten Längsprofils anstatt im rechten Winkel bevorzugt derart vorbereitet, dass die Stirnfläche mit der Verbindungsseite des zweiten Längsprofils den selben Winkel einschliesst wie die Längsprofile untereinander.

Vorliegende Erfindung betrifft eine Verbindung einer Stirnseite eines quergeschnittenen Längsprofils mit der Verbindungsseite eines zweiten Längsprofils. Dabei wird das quergeschnittene Längsprofil willkürlich als erstes Längsprofil bezeichnet Die Erfindung umfasst jedoch sinngemäss auch die Verbindung einer Stirnfläche eines ersten, nicht quergeschnittenen Längsprofils mit einer Verbindungsseite eines zweiten Längsprofils.

Die erfindungsgemäss erforderliche stirnseitige Ausnehmung des ersten Längsprofils kann querschnittlich nur einen Teil der Stirnfläche betreffen oder aber die ganze zwischen den Wandseiten des ersten Längsprofils liegende Stirnfläche. Bevorzugt betrifft die stirnseitige Ausnehmung den ganzen zwischen den Wandseiten liegenden Teil der Stirnfläche des ersten Längsprofils, so dass von der stirnseitigen Ausnehmung im wesentlichen die Profillappen sowie gegebenenfalls die Profilstege im stirnflächennahen Bereich des ersten Längsprofils betroffen sind. Durch die stirnseitige Ausnehmung des ersten Längsprofils werden im Anschluss an die Ausnehmung, insbesondere wandseitig, stirnseitige Flansche ausgebildet. Betrifft die stirnseitige Ausnehmung die ganze zwischen den Wandseiten liegende Stirnfläche, so werden die stirnseitigen Flansche durch die an der Stirnseite abstehenden Wandseiten des ersten Längsprofils gebildet

Bevorzugt weisen die durch die stirnseitige Ausnehmung wandseitig geschaffenen stirnseitigen Flansche eine Höhe von mindestens 2 mm und insbesondere zwischen 2 bis 5 mm auf.

Die stirnseitige Ausnehmung bildet eine negative Profilkonfiguration und weist bevorzugt eine rein konkave Form auf. Zudem ist sie derart ausgebildet, dass sie zusammen mit der positiven Profilkonfiguration des Verbindungselementes eine formschlüssige Verbindung ermöglicht. Bevorzugt weist das Verbindungselement eine rein konvexe Gestalt auf. Von vorliegender Erfindung sind jedoch auch Verbindungen umfasst, bei denen die stirnförmige Ausnehmung und das Verbindungselement beispielsweise passgenaue Nut-Feder-Ausbildungen aufweisen, um beispielsweise die Dichtigkeit der Verbindung oder die Kraftübertragung zu verbessern. Unter formschlüssiger Verbindung wird im vorliegenden Text nicht nur die exakt passgenaue Ausgestaltung der stirnseitigen Ausnehmung mit dem in die Ausnehmung ragenden Teil des Verbindungselementes verstanden; vielmehr sind auch die im wesentlichen passgenauen Verbindungen zwischen obigen Teilen umfasst, welche beispielsweise durch das Einfügen einer Verbindungsmasse zwischen das Verbindungselement und die stirnseitige Ausnehmung eine dichte oder formschlüssige Verbindung erlauben. Zudem wird unter formschlüsser Ausgestaltung der stirnseitigen Ausnehmung mit dem Verbindungselement immer die formschlüssige Ausgestaltung dieser beiden Teile bei in die nutartige Vertiefung eingesetztem Verbindungselement verstanden, so dass von der formschlüssigen Ausgestaltung der Verbindung neben der stirnseitigen Ausnehmung nur der über die Längsflansche des zweiten Längsprofils ragende Teil des Verbindungselementes betroffen ist.

In einer bevorzugten Ausführungsform der erfindungsgemässen Verbindung befindet sich zwischen dem Verbindungselement und der stirnseitigen Ausnehmung des ersten Längsprofils und/oder zwischen dem Verbindungselement und den Längsflansche des zweiten Längsprofils eine Verbindungsmasse zum Abdichten der Verbindung oder zur Ausgestaltung einer exakt formschlüssigen Verbindung zwischen dem Verbindungselement und der stirnseitigen Ausnehmung.

Die Verbindungsmasse kann beispielsweise eine Klebemasse, eine Dichtung, eine Kittmasse oder auch eine Schweiss- oder Lötnaht sein. Als Klebemasse können beispielsweise ein Acrylkleber, Cyanidkleber, oder Ein- oder Zweikomponenten-Polyurethan- oder Epoxykleber vorgesehen werden. Dichtungen können aus natürlichen Stoffen, wie Kork oder dergleichen oder aus Kunstoffen oder Elastomeren, wie beispielsweise Gummi, Kautschuk oder thermoplastischen Kunststoffen sein. Kitte sind beispielsweise Dichtungsmassen auf Bitumen-, Kunststoff- oder Ölbasis, die zunächst plastisch sind und nach einiger Zeit zu festen, mehr oder weniger elastischen Massen erhärten, wobei sie eine gewisse Plastizität beibehalten. Eine Schweissnaht kann beispielsweise durch autogenes Schweissen, Schweissen durch elektrische Gasentladung, Elektronenstrahlschweissen, Laserschweissen oder durch Metallschutzgasschweissen wie Metall-Inertgasschweissen (MIG) oder Wolfram-Inertgasschweissen (TIG) angebracht werden.

Die Verbindungselemente können an und für sich eine beliebige, zur stirnseitigen Ausnehmung komplementäre Gestalt aufweisen. Bevorzugte Körper von Verbindungselementen sind beispielsweise schiefe oder gerade rechteckige Pyramidenstumpfe sowie schiefe oder gerade Zylinder mit beispielsweise rechteckiger Grundfläche und dabei insbesondere Körper in Form eines Spates oder Quaders. Die in die nutartige Vertiefung eingesetzte Seite des Verbindungselementes wird als Boden, die gegenüberliegende Seite als Deckfläche und die der Wandseite des zweiten Längsprofils zugekehrten Seiten des Verbindungselementes werden als wandseitige Abschlussflächen sowie die in Richtung der nutartigen Vertiefung liegenden Seiten als verbindungsseitige Abschlussflächen bezeichnet Die Deckfläche des Verbindungselementes kann eben oder gewölbt sein und sie kann parallel oder schräg zum Boden zu liegen kommen.

Zweckmässigerweise ist die Höhe der wandseitigen Abschlussflächen des Verbindungselementes grösser als die Höhe des entsprechenden Längsflansches des zweiten Längsprofils. Bevorzugt ist die Höhe der jeweiligen wandseitigen Abschlussfläche des Verbindungselementes um mindestens 1.5 mm, insbesondere um 1.5 bis 4.5 mm, grösser als die Höhe des entsprechenden Längsflansches. Dieser Höhenunterschied zwischen dem Verbindungselement und dem entsprechenden Längsflansch wird im weiteren als Überhöhung des Verbindungselementes bezeichnet

Beträgt die Höhe der stirnseitigen Flansche weniger als die Überhöhung des Verbindungselementes, so stützt sich das erste Längsprofil wenigstens zum Teil mit den stirnseitigen Abschlussflächen der Profilstege, Profillappen oder Längsflansche auf der Deckfläche und/oder der Abschlussflächen des Verbindungselementes ab. Ist die Höhe der stirnseitigen Flansche grösser als die Überhöhung des Verbindungselementes, so stützt sich das erste Längsprofil mit den stirnseitigen Abschlussflächen der Wandseiten, bzw. den stirnseitigen Flanschen des quergeschnittenen Längsprofils auf den Längsflanschen des Längsprofils ab.

Die Verbindungselemente können beispielsweise aus Stahl, Kunststoff oder Leichtmetallen wie Aluminium oder seiner Legierungen bestehen. Bevorzugt besteht das Verbindungselement aus dem selben Werkstoff wie die Längsprofile oder aus einem Werkstoff mit einem ähnlichen thermischen Ausdehnungskoeffizienten wie die Längsprofile. Zur Verbesserung der Dichtheit der erfindungsgemässen Verbindung kann gegebenenfalls die Materialwahl für das Verbindungselement derart erfolgen, dass möglichst kleine thermomechanische Spannungen zwischen dem Verbindungselement und der zu verwendenden Verbindungsmasse auftreten.

Die Verbindungselemente könne beispielsweise durch Giessen, Fliesspressen oder Schmieden hergestellt werden. Die endgültige Formgebung kann durch beispielsweise spanabhebende, mechanische Verfahren wie Fräsen geschehen.

Die Verbindungselemente könnnen in ihrer Breite derart gestaltet sein, dass sie in der nutartigen Vertiefung gleitbar gelagert werden können oder sie können in der nutartigen Vertiefung festgelegt werden. Das Festlegen der Verbindungselemente in der nutartigen Vertiefung kann beispielsweise durch Verklemmen, Verstemmen, Verkeilen, Einclippen, Einklinken, Verspannen, Schrauben, Nieten oder durch Löten, Schweissen oder Verkleben geschehen.

Die wandseitigen Abschlussflächen des Verbindungselementes können parallel zu den Wandseiten der Längsprofile verlaufen, wobei die Breite des Verbindungselementes um beispielsweise 5 bis 100 µm kleiner ist als der durch die stirnseitigen Flansche des ersten Längsprofils definierte Abstand.

Um eine dichte Verbindung zu gewährleisten, entspricht die Länge des Verbindungselementes an seiner Deckfläche zweckmässigerweise der Länge der Stirnfläche des ersten Längsprofils.

Zwischen den Verbindungsseiten der Längsprofile werden wenigstens teilweise in die nutartige Vertiefung der Längsprofile einführbare Eckwinkel angebracht, wobei jeder Eckwinkel zwei im Winkel befindliche Schenkel aufweist und jeder Schenkel des Eckwinkels an den entsprechenden Verbindungsseiten der Längsprofile durch wenigstens eine Klemm-Schraubverbindung festgelegt ist, wobei jede Schraube in ein Gewinde eines Gegenhalteelementes, wie beispielsweise eines von vorn in die hinterschnittene Nut einführbaren Klemmplättchens, eingreift und jeder Schenkel des Eckwinkels wenigstens eine Bohrung für die Aufnahme der in das/die Gewinde des/der Klemmplättchen eingreifende/n Schraube/n aufweist

Die Schenkel der Eckwinkel können zudem eine in die hinterschnittene Nut des Längsprofils einführbare federförmige Anformung aufweisen.

Die Klemm-Schraubverbindungen können bereits vor dem Einfügen des Eckwinkels in die nutartigen Vertiefungen der Längsprofile an den entsprechenden Eckwinkel-Schenkeln festgelegt werden. Beim Zusammenfügen der Längsprofile mit dem Eckwinkel werden dann die Federn des Eckwinkels in die hinterschnittenen Nuten der Profile gestossen und dabei die entsprechenden Klemmstücke in Längsrichtung in die Nutenöffnung eingeführt. Da das Klemmplättchen eine Gewindebohrung aufweist, in welche eine den Eckwinkel durchsetzende Schraube eingreift, kann es nunmehr in einfacher Weise durch Drehung der Schraube in Hinterschneidungen der hinterschnittenen Nut eingeschwenkt werden. Die Schenkel des Eckwinkels können in ihrer Dicke so gewählt werden, dass die Bohrungen für die Schrauben angesenkt und Senkkopfschrauben angewendet werden können. Die dazu notwendige Stärke des Eckwinkels kann auch durch eine ausgeprägte federförmige Anformung erreicht werden. Das Festziehen der Klemm-Schraubverbindung geschieht somit ausschliesslich von der Aussenseite des Eckwinkels her, so dass kein Gegenhaltewerkzeug für das Klemmplättchen notwendig ist.

Die Klemmplättchen können auf der Seite, die gegen die Profillappen des Längsprofiles gerichtet sind, Keilflächen aufweisen, welche mit Keilflächen der Profillappen korrespondieren. Beim Festziehen des Klemmplättchens zentriert sich das Klemmplättchen durch die gegenseitige Berührung und gegebenenfalls durch die Gleitbewegung der Keilflächen von Klemmplättchen und Profillappen.

Die Klemmplättchen können beispielsweise als Parallelogramm ausgebildet sein, wobei der grössere Durchmesser des Parallelogramms grösser ist als die Weite der Längsnut. Hierdurch verkeilt sich das Klemmplättchen automatisch beim Festziehen der Klemmschrauben an den Innenwänden der Längsnut, so dass ein Durchdrehen des Klemmplättchens vermieden wird.

Eine besonders bevorzugte Ausgestaltung der erfindungsgemässen Verbindung wird dadurch erreicht, dass die verbindungsseitigen Abschlussflächen des Verbindungselementes eine zur Biegung des Eckwinkels korrelativ kongruente Form, d.h. eine dem Eckwinkel angepasste gerundete Abschlussform oder eine zur Eckwinkelbiegung komplementäre Form, aufweisen.

In einer bevorzugten Ausführungsform ist das Verbindungselement als U-förmiges Längsprofil mit seitlich abragenden Flanschen ausgebildet. Solche U-förmige Verbindungselemente können mit den abragenden Flanschen auf die Profillappen des zweiten Längsprofils gesetzt werden oder aber sie können mit ihrer Deckfläche auf diesen abgestützt werden.

In einer anderen bevorzugten Ausführungsform weist das Verbindungselement am Boden eine in die hinterschnittene Nut des zweiten Längsprofils einführbare federförmige Anformung auf.

In einer weiteren bevorzugten Ausführungsform weist das Verbindungselement an beiden wandseitigen Abschlussflächen eine Nut auf, so dass das Verbindungselement mit seiner Nut in die durch die hinterschnittene Nut des zweiten Längsprofils gebildeten Profillappen eingeschoben werden kann.

Das Verbindungselement kann zudem an seinen wandseitigen Abschlussflächen lappenartige Anformungen aufweisen. Dadurch wird insbesondere die zur Verfügung stehende Fläche für die von einem Längsprofil auf das andere zu übertragenden Kräfte vergrössert.

Damit andere Strukturelemente als Längsprofile an die erfindungsgemässe Verbindung gefügt werden können, kann in einer weiteren vorteilhaften Ausführungsform des Verbindungselementes an einer wandseitigen Abschlussfläche eine wulstförmige Anformung und auf der gegenüberliegenden wandseitigen Abschlussfläche eine angeformte Supportkonsole angeformt sein. Die Supportkonsole kann beispielsweise eine oder mehrere Befestigungsöffnungen aufweisen. Durch die über die Supportkonsole mit der erfindungsgemässen Verbindung gefügten weiteren Bauteile werden auf letztere einwirkende Kräfte direkt in die Verbindung geleitet.

Die Erfindung betrifft auch ein Verfahren zur Herstellung der erfindungsgemässen Verbindung, wobei ein Verbindungselement in die nutartige Vertiefung des zweiten Längsprofils eingeführt und an der vorgesehenen Montageposition des zweiten Längsprofils positioniert wird, der/die Eckwinkel in die nutartige Vertiefung des zweiten Längsprofils eingeschoben und provisorisch fixiert wird/werden, die ganze so vorbereitete Verbindung mit einer Verbindungsmasse versehen wird und das erste Längsprofil in die frei liegenden Schenkel des/der provisorisch fixierten Eckwinkel eingeschoben und der/die Eckwinkel durch Festziehen der Klemm-Schraubverbindungen trennfest mit den zu verbindenden Längsprofilen verbunden wird. Eine derart hergestellte Verbindung kann unmittelbar nach ihrer Fertigstellung mechanisch belastet werden, da die auf ein Längsprofil einwirkenden Kräfte über die Eckwinkel auf das andere Längsprofil übertragen werden.

Die erfindungsgemässen Verbindungen eignen sich besonders für den Zusammenbau von aus Längsprofilen aufgebauten Gerippestrukturen für beispielsweise Wagenkasten von Schienen- oder Strassenfahrzeugen oder für den Zusammenbau von anderen aus Längsprofilen zusammengesetzten Aufbauten wie beispielsweise Führerkabinen für Krane, Landwirtschafts- oder Kommunalfahrzeuge. Solche Aufbauten aus Gerippestrukturen werden üblicherweise noch mit weiteren Strukturbauteilen wie beispielsweise Stahl- oder Aluminiumbleche, Panelen aus Kunststoff oder mit Glassegmenten versehen. Zudem kann eine solche Gerippestruktur auf seiner Aussenfläche mit beispielsweise Türen verschlossen werden. Zur Befestigung einer Innenverschalung oder einer Aussenverschalung können beispielsweise Schraub-, Niet- oder Klebeverbindungen angewandt werden oder an den Strukturbauteilen können Klettverschlussteile angebracht werden. Diese Klettverschlussteile können auflaminiert oder aufgeklebt sein.

Vorliegende Erfindung wird beispielhaft an den Figuren 1 bis 4 weiter erläutert.

Figur 1 zeigt eine perspektivische Ansicht einer erfindungsgemässen Verbindung von zwei in einem rechten Winkel stehenden Strangpressprofilen.

Figur 2 stellt eine Explosionszeichnung des in Figur 1 dargestellten Gegenstandes dar.

Figur 3 zeigt verschieden gestaltete Verbindungselemente in perspektivischer Ansicht.

Figur 4 zeigt die Seitenansicht des in Figur 1 dargestellten Gegenstandes mit verschieden gestalteten Verbindungselementen entlang dem Schnitt IV-IV.

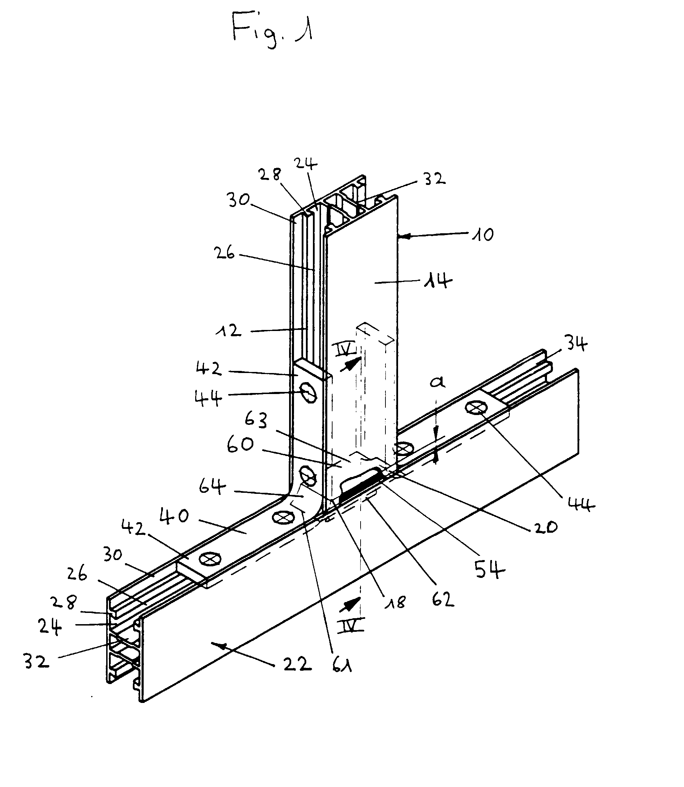

Figur 1 zeigt eine perspektivische Darstellung einer erfindungsgemässen Verbindung eines ersten quergeschnittenen Längsprofils 10 mit einem rechtwinklig dazu liegenden zweiten Längsprofil 22. Die Längsprofile zeigen auf zwei gegenüberliegenden Seiten -- den Verbindungsseiten 12 -- je eine Längsöffnung 26 aufweisende, beidseits hinterschnittene Nut 24 und beidseits der Nut einen angeformten Längsflansch 30. Durch die hinterschnittene Nut entstehen Profillappen 28. Die durch die Profillappen und die Längsflansche gebildete nutartige Vertiefung 34 des zweiten Längsprofils 22 dient der Aufnahme und Führung des Verbindungselementes 60 und der Eckwinkel 40. In einem Abstand zu den Profillappen 28 befindet sich der Profilsteg 32. Die mit dem zweiten Längsprofil 22 zu verbindende quergeschnittene Profilfläche des ersten Längsprofiles 10 weist eine stirnseitige Ausnehmung 18 auf, die derart gestaltet ist, dass sie zusammen mit dem Verbindungselement 60 eine formschlüssige Verbindung bildet.

Das in Figur 1 dargestellte Verbindungselement 60 zeigt eine an den Boden 61 des Verbindungselementes 60 angeformte Feder 62, welche in die Längsöffnung 26 der hinterschnittenen Nut 24 greift. Der-Boden 61 des Verbindungselementes 60 wird durch die Profillappen 28 des Längsprofils 22 gestützt. Zudem wird das Verbindungselement 60 durch die Feder 62 in der Längsöffnung 26 des Längsprofils 22 geführt.

Das in das Längsprofil 22 eingesetzte Verbindungselement 60 ragt um die Überhöhung a über den äusseren Rand des Längsflansches 30 des Längsprofils 22, wobei die Überhöhung a die Differenz der Höhe des Verbindungselementes 60 und der Höhe des Längsflansches 30 bezeichnet. Die stirnseitige Ausnehmung 18 im Längsprofil 10 betrifft die Profillappen 28 und die Profilstege 32 im stirnseitigen Bereich des Längsprofils 10. Durch diese Ausnehmung 18 werden an den Wandseiten 14 des Längsprofils 10 stirnseitige Flansche 20 gebildet. Beträgt die Höhe der stirnseitigen Flansche 20 weniger als die Überhöhung a des Verbindungselementes 60, so stützt sich das erste Längsprofil 10 wenigstens zum Teil mit den durch die Ausnehmung 18 entstandenen stirnseitigen Abschlussflächen der Profilstege 32 und Profillappen 28 auf der Deckfläche 63 des Verbindungselement 60 ab. Ist die Höhe der stirnseitigen Flansche 20 grösser als die Überhöhung a des Verbindungselementes 60, so stützt sich das erste Längsprofil 10 mit den stirnseitigen Flanschen 20 auf den Längsflanschen 30 des Längsprofils 22 ab.

In der in Figur 1 gezeigten Verbindung wird das mechanisch starre Festlegen der über das Verbindungselement 60 verbundenen Längsprofile 10, 22 über zwei Eckwinkel 40 bewirkt. Die in Figur 1 dargestellten Eckwinkel 40 zeigen eine zum Abstand der Längsflansche 30 passgenaue Schenkelbreite. Die Eckwinkel 40 können an ihren Schenkeln 42 auch eine federförmige Anformung aufweisen (nicht dargestellt), welche in die Längsöffnung 26 der hinterschnittenen Nut 24 eingreifen. Bei den in Figur 1 gezeigten Eckwinkel 40 entspricht die Dicke der Schenkel 42 der Höhe der Längsflansche 30, so dass der obere Rand der Eckwinkel-Schenkel 42 bündig mit der Oberkante der Längsflansche 30 abschliesst.

Jeder Schenkel 42 des Eckwinkels 40 wird an den entsprechenden Verbindungsseiten 12 der Längsprofile 10, 22 durch zwei Klemm-Schraubverbindungen festgelegt. Jeder Schenkel 42 weist demzufolge zwei in einem Abstand befindliche Bohrungen 44 für die Aufnahme von in die Gewinde der Klemmplättchen eingreifenden Schrauben auf.

Das Zusammenwirken der stirnseitigen Flansche 20 mit dem Verbindungselement 60 verleiht der Verbindung seitliche Stabilität und erlaubt die Übertragung von seitlich auf ein Längsprofil einwirkenden Kräften auf das andere Längsprofil auch bei dünnwandigen Längsprofilen. Als weiteres wesentliches Element dieser erfindungsgemässen Verbindung erlaubt das Zusammenwirken des Verbindungselementes 60 mit den stirnseitigen Flanschen die Herstellung von seitlich abgedichteten Eckverbindungen und damit auch die Herstellung von abgedichteten Kastenaufbauten von beispielsweise Fahrzeugen.

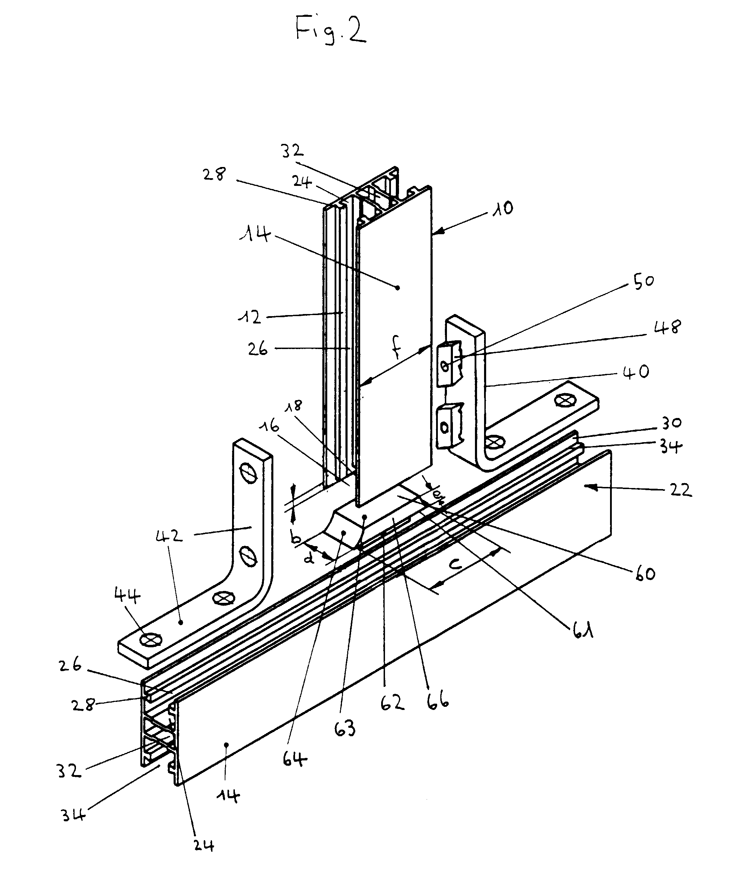

Figur 2 zeigt eine Explosionszeichnung des in Figur 1 dargestellten Gegenstandes. Die beiden Längsprofile 10 und 22 haben gleiches Aussehen und weisen zwei Wandseiten 14 und zwei Verbindungsseiten 12 auf, wobei die Verbindungsseiten 12 durch eine eine Längsöffnung 26 aufweisende, beidseits hinterschnittene Nut 24 gebildet wird. Durch die hinterschnittene Nut 24 werden Profillappen 28 gebildet. In einem Abstand zu den Profillappen 28 befindet sich auf jeder Verbindungsseite 12 ein die Wandseiten 14 verbindender Profilsteg 32, welcher die hinterschnitte Nut 24 auf der der Längsöffnung abgekehrten Seite abschliesst. Die von den Profillappen abstehenden Teile der Wandseiten 14 stellen die Längsflansche 30 dar. Der Abstand der Längsflansche 30 des Längsprofils 10 entspricht demjenigen des Längsprofils 22.

Die wandseitigen Abschlussflächen 66 des Verbindungselementes 60 verlaufen beispielsweise parallel zu den Wandseiten 14 der Längsprofile 10, 22 oder das Verbindungselement 60 weist beispielsweise eine kegelstumpfförmige Form auf, so dass sich die Breite des Verbindungselementes 60 vom Boden 61 in Richtung Deckfläche 63 verjüngt. Die Breite d des Verbindungselementes 60 ist kleiner als der Abstand der Längsflansche 30, so dass das Verbindungselement auf den Profillappen verschiebbar gelagert ist. Die verbindungsseitige Abschlussflächen 64 des Verbindungselementes 60 sind in ihrer Form derart gestaltet, dass sie die durch die Biegung der Eckwinkel definierte Rundung formschlüssig aufnehmen können, d.h. die verbindungsseitigen Abschlussflächen 64 sind konkav nach innen gewölbt und der Radius entspricht dem Biegeradius des Eckwinkels. Durch die konkave Ausgestaltung der verbindungsseitigen Abschlussflächen 64 weist das Verbindungselement 60 eine im Vergleich zum Boden 61 kürzere Deckfläche 63 auf. Die Länge der Deckfläche 63 entspricht vorteilhaft der Breite f des quergeschnittenen Längsprofils 10 an seiner Stirnfläche 16. Die Länge c des Bodens 61 ist demnach länger als diejenige der Deckfläche 63 und bestimmt sich aufgrund der Länge der Deckfläche 63 und der konkaven Krümmung der verbindungsseitigen Abschlussfläche 64 des Verbindungselementes 60. Die Höhe e des Verbindungselementes 60 ist grösser als die Höhe dere Längsflansche 30 des Längsprofils 22. Die Differenz der Höhe e des Verbindungselementes 60 und der Höhe des Längsflansches 30 wird als Überhöhung a des Verbindungselementes 60 bezeichnet Bevorzugt beträgt diese Überhöhung des Verbindungselementes 60 mehr als 1.5 mm und insbesondere zwischen 1.5 und 4.5 mm. Das in Figur 2 dargestellte Verbindungselement 60 weist am Boden 61 zusätzlich eine angeformte Feder 62 auf, die in die Längsöffnung 26 der hinterschnittenen Nut 24 passt.

Das quergeschnittene Längsprofil 10 weist eine stirnseitige Ausnehmung 18 auf, von der die Profillappen 28 sowie die Profilstege 32 des Längsprofils 10 im Bereich der Stirnfläche 16 betroffen sind, d.h. im wesentlichen der ganze stirnseitige Bereich zwischen den Wandseiten 14 des Längsprofils 10, wodurch im stirnseitigen Bereich des Längsprofils 10 freistehende Enden der Wandseiten 14, die sogenannten stirnseitigen Flansche 20, entstehen. Die Höhe b der stirnseitigen Flansche beträgt bevorzugt 2 mm oder mehr und insbesondere 2 bis 5 mm, so dass sich das Längsprofil 10 mit seinen stirnseitigen Flanschen 20 auf den Längsflanschen 30 des Längsprofils 22 abstützt.

In Figur 2 sind zudem zwei Eckwinkel 40 zum mechanischen Fixieren der durch das Verbindungselement 60 festgelegten Längsprofile 10, 22 gezeigt. Die Eckwinkel 40 weisen zwei im Winkel befindliche Schenkel 42 auf, wobei jeder Schenkel 42 mit zwei in einem Abstand befindlichen Bohrungen 44 für Schrauben 50 versehen ist.

Die Breite der Schenkel 42 ist geringer als der Abstand der Längsflansche 30, so dass sich die Eckwinkel 40 in die nutartigen Vertiefungen 34 der Verbindungsseiten 12 einführen lassen. Die Dicke der Schenkel 42 wird bevorzugt derart gewählt, dass die Schenkel 42 bündig mit der Oberkante der Längsflansche 30 abschliessen.

Das Festlegen der Eckwinkel geschieht bevorzugt durch zwei Klemm-Schraubverbindungen pro Schenkel 42, wobei die Schrauben 50 in je ein Gewinde eines von vorn in die hinterschnittene Nut 24 einführbares Klemmplättchen eingreift. Die Schenkel 42 des Eckwinkels können auch federförmige Anformungen, welche in die Längsöffnungen 26 der Längsprofile 10, 22 einführbar sind, aufweisen.

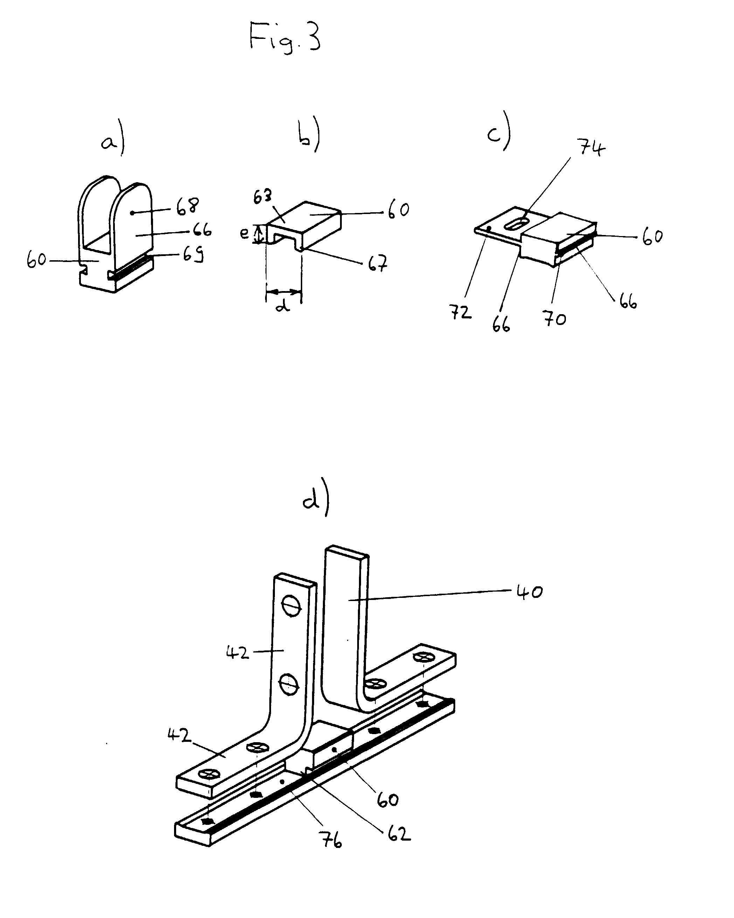

Figur 3 zeigt beispielhafte Ausgestaltungen von Verbindungselementen 60. Das in Figur 3 a) gezeigte Verbindungselement 60 weist an den beiden wandseitigen Abschlussflächen 66 Nuten 69 sowie lappenartige Anformungen 68 auf. Diese Ausgestaltung des Verbindungselementes 60 erlaubt eine hohe Kraftübertragung zwischen den Profilen. Die Nuten 69 sind derart ausgebildet, dass das Verbindungselement 60 mit seinen Nuten 69 in die Profillappen 28 der hinterschnittenen Nut 24 des Längsprofils 22 eingeführt werden kann. Die lappenartigen Anformungen 68 verleihen der erfindungsgemässen Verbindung zusätzliche seitliche Stabilität

Das in Figur 3 b) gezeigte Verbindungselement 60 weist einen einfachen U-förmigen Querschnitt mit Flanschen 67 auf. Ein derart gestaltetes Verbindungselement 60 kann mit den Flanschen auf die Profillappen 28 des Längsprofils 22 oder umgekehrt, d.h. mit der Deckfläche 63 auf den Profillappen, eingesetzt werden. Die Höhe e des Verbindungselementes 60 ist derart ausgebildet, dass das in die nutartige Vertiefung 34 des Längsprofils 22 eingesetzte Verbindungselement 60 wenigstens 2 mm über die entsprechende Oberkante des Längsflansches 30 ragt.

Das in Figur 3 c) dargestellte Verbindungselement 60 weist an einer wandseitigen Abschlussfläche 66 eine wulstförmige Anformung 70 und an der gegenüberliegenden wandseitigen Abschlussfläche 66 eine angeformte Supportkonsole 72 mit einer Befestigungsöffnung 74 zur Durchführung von beispielsweise Schrauben, Nieten, Bolzen oder Klemmkeilen auf. In einer erfindungsgemässen Verbindung mit einem derart ausgebildeten Verbindungselement 60 kommen die beiden wandseitigen Anformungen zwischen die stirnseitigen Flansche 20 des quergeschnittenen Längsprofils 10 und die entsprechenden verbindungsseitigen Längsflansche 30 des Längsprofils 22 zu liegen. Die Supportkonsole 72 dient zum Festlegen von anderen Bauteilen durch beispielsweise Schrauben, Nieten, Verklemmen, Löten, Schweissen oder Kleben und erlaubt die direkte Krafteinleitung vom Bauteil in die erfindungsgemässe Verbindung.

Das in Figur 3 d) dargestellte Verbindungselement 60 weist eine in die Längsöffnung 26 des Längsprofils 22 einführbare Feder 62 auf. Zudem ist -- anstelle der Klemmplättchen -- eine durchgehende Klemmleiste 76 zum gemeinsamen Festlegen der Schenkel 42 am Längsprofil 22 gezeigt.

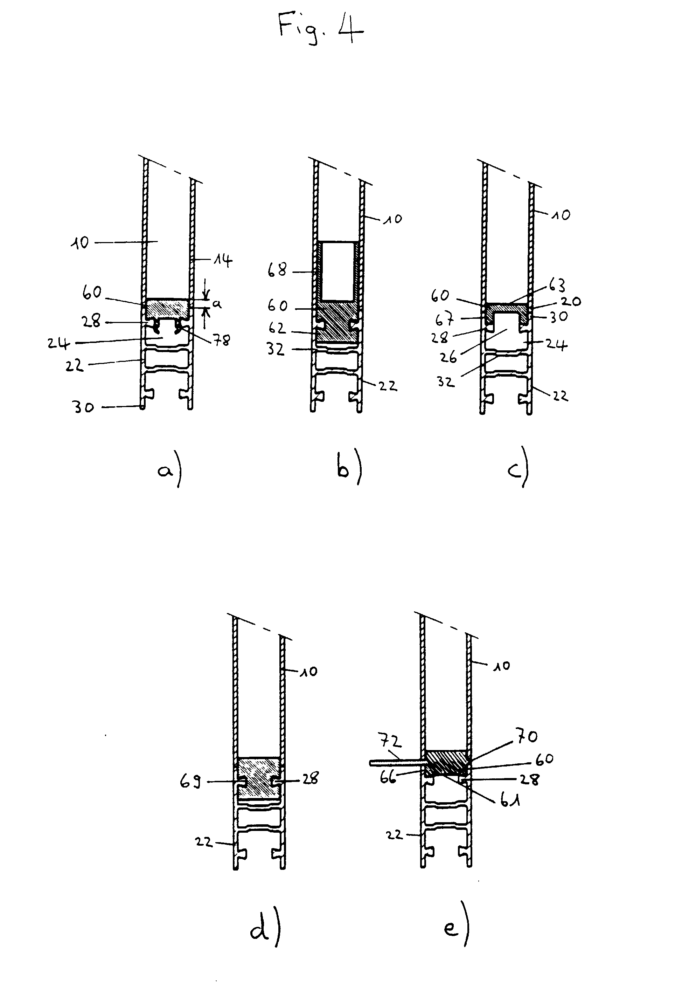

In Figur 4 sind Seitenansichten von erfindungsgemässen Verbindungen mit verschieden gestalteten Verbindungselementen 60 dargestellt. In allen dargestellten Seitenansichten ist unten jeweils der Querschnitt des Längsprofils 22 und im oberen Bildteil ein Längsschnitt durch das Längsprofil 10 zu sehen, wobei vom quergeschnittenen Längsprofil 10 jeweils nur die Wandseiten 14 eingezeichnet sind. Die Seitenansicht des Längsprofils 22 entspricht seinem Querschnitt, so dass die eine Längsöffnung 26 aufweisenden hinterschnittenen Nuten 24 mit den angeformten Längsflanschen 30, die Profilstege 32 sowie die Profillappen 28 zu erkennen sind.

Das in Figur 4 a) gezeigte Verbindungselement 60 weist zwei in die Längsöffnung 26 der hinterschnittenen Nut 24 einführbare Fahnen 78 auf. Solche an das Verbindungselement angeformte Fahnen 78 eignen sich insbesondere zum Einclippen oder Einklinken des Verbindungselementes 60 in die hinterschnittene Nut 24.

Figur 4 b) zeigt eine Verbindung mit einem mit Nuten 69 und lappenförmigen Anformungen 68 versehenen Verbindungselement 60 und zeigt somit die Seitenansicht einer mit einem in Figur 3 a) gezeigten Verbindungselement 60 festgelegten Verbindung zweier Längsprofile 10, 22.

Figur 4 c) zeigt die Seitenansicht einer erfindungsgemässen Verbindung mit einem U-förmigen Verbindungselement 60, welches mit seinen Flanschen 67 auf die Profillappen 28 des Längsprofils 22 aufgesetzt ist. Die Flansche 67 verbinden die Längsflansche 30 des Längsprofils 22 mit den stirnseitigen Flansche 20 des Längsprofils 10.

Figur 4 d) zeigt die Seitenansicht einer erfindungsgemässen Verbindung zweier Längsprofile 10, 22 mit einem Verbindungselement 60, welches auf seinen wandseitigen Abschlussflächen je eine Nut 69 aufweist, die derart ausgebildet ist, dass das Verbindungselement 60 in die hinterschnittene Nut 24 einführbar ist. Das Verbindungselement 60 wird mittels seiner Nuten 69 in den Profillappen 28 des Längsprofils 22 geführt. Senkrecht und seitlich auf das Verbindungselement 60 einwirkende Kräfte werden somit durch die Nut-Profillappen-Verbindung aufgenommen, respektive auf das Längsprofil 22 übertragen.

Die Figur 4 e) stellt eine Seitenansicht einer erfindungsgemässen Verbindung mit einem gemäss Figur 3 c) ausgestalteten Verbindungselement 60 dar. Das Verbindungselement 60 weist an einer wandseitigen Abschlussfläche 66 eine wulstförmige Anformung 70 und auf der anderen wandseitigen Abschlussfläche eine angeformte Supportkonsole 72 auf. In der in Figur 4 e) dargestellten Ausführungsform wird der Boden 61 des Verbindungselementes 60 durch die Profillappen 28 des Längsprofils 22 gestützt. Die wandseitigen Anformungen 70, 72 kommen in dieser Ausführung zwischen die stirnseitigen Flansche 20 des quergeschnittenen Längsprofils 10 und die Längsflansche 30 des Längsprofils 22 zu liegen.

Bei einer gemäss vorliegender Erfindung hergestellten Verbindung von einem in Längsrichtung profilierten Längsprofil mit der Stirnfläche eines zweiten in einem Winkel dazu stehenden Längsprofil geschieht die Kraftübertragung von einem Längsprofil auf das andere im wesentlichen über das Verbindungselement, wodurch speziell bei dünnwandigen Profilen eine optimale Kraftübertragung gewährleistet wird.

Zudem ermöglicht die erfindungsgemässe Verbindung das Fügen zweier in einem Winkel stehender Längsprofile ohne eine aufwendige Nachbearbeitung der Stirnfläche des quergeschnittenen Profils, da für die erfindungsgemässe Verbindung keine saubere Trennlinie des quergeschnittenen Längsprofils mehr erforderlich ist.

Im weiteren ermöglicht die erfindungsgemässe Verbindung die Herstellung einer dichten Verbindung zwischen den gefügten Längsprofilen, da durch das Verbindungselement eine für das Anbringen einer Verbindungsmasse genügend grosse Anschlagsfläche geschaffen wird.

## Patentansprüche

1. Verbindung von zwei in einem Winkel stehenden Längsprofilen (10,22) mit je zwei Verbindungs- (12) und Wandseiten (14), wobei wenigstens eine Verbindungsseite (12) jedes Längsprofils (10,22) eine beidseits hinterschnittene Nut (24) mit Profillappen (28) und beidseits der hinterschnittenen Nut (24) einen angeformten Längsflansch (30) aufweist, so dass zwischen den beiden Längsflanschen (30) eine nutartige Vertiefung (34) gebildet wird, und die Stirnseite des ersten Längsprofils (10) gegen eine Verbindungsseite (12) des zweiten Längsprofils (22) gerichtet ist, und die Längsprofile (10,22) mittels wenigstens einem zwischen den entsprechenden Verbindungsseiten (12) der Längsprofile (10,22) angebrachten Eckwinkel (40) aneinander festgelegt sind, wobei der Eckwinkel (40) zwei im Winkel befindliche Schenkel (42) aufweist, und jeder Schenkel (42) des Eckwinkels (40) in die entsprechende nutartige Vertiefung (34) der miteinander verbundenen Längsprofile (10,22) eingeführt ist,
dadurch gekennzeichnet, dass
das erste Längsprofil (10) an seiner Stirnfläche (16) eine stirnseitige Ausnehmung (18) aufweist und in diese ein in die nutartige Vertiefung (34) zwischen den Längsflanschen (30) des zweiten Längsprofils (22) eingeführtes Verbindungselement (60) greift, wobei das Verbindungselement (60) zusammen mit der stirnseitigen Ausnehmung (18) eine formschlüssige Verbindung bildet.

2. Verbindung gemäss Anspruch 1, dadurch gekennzeichnet, dass sich zwischen dem Verbindungselement (60) und der stirnseitigen Ausnehmung (18) des ersten Längsprofils (10) und/oder zwischen dem Verbindungselement (60) und den Längsflanschen (30) des zweiten Längsprofils (22) eine Verbindungsmasse (54) zum Abdichten der Verbindung oder zur Ausgestaltung einer exakt formschlüssigen Verbindung zwischen dem Verbindungselement (60) und der stirnseitigen Ausnehmung (18) befindet.

3. Verbindung gemäss Anspruch 1, dadurch gekennzeichnet, dass die durch die stirnseitige Ausnehmung (18) wandseitig geschaffenen stirnseitigen Flansche (20) eine Höhe von mindestens 2 mm und insbesondere zwischen 2 bis 5 mm aufweisen.

4. Verbindung gemäss Anspruch 1, dadurch gekennzeichnet, dass die Höhe e jeder wandseitigen Abschlussfläche (66) des Verbindungselementes (60) um mindestens 1.5 mm, insbesondere um 1.5 bis 4.5 mm, grösser ist als die Höhe des entsprechenden Längsflansches (30) des zweiten Längsprofils (22).

5. Verbindung gemäss Anspruch 1, dadurch gekennzeichnet, dass die Deckfläche (63) des Verbindungselementes (60) eine Länge c aufweist, die der Länge der Stirnfläche des ersten Längsprofils (10) entspricht.

6. Verbindung gemäss Anspruch 1, dadurch gekennzeichnet, dass jeder Schenkel (42) des Eckwinkels (40) an den entsprechenden Verbindungsseiten (12) der Längsprofile (10,22) durch wenigstens eine Klemm-Schraubverbindung festgelegt ist, wobei jede Schraube (50) in ein Gewinde eines von vorn in die hinterschnittene Nut (24) einführbaren Klemmplättchens (48) eingreift und jeder Schenkel (42) des Eckwinkels (40) wenigstens eine Bohrung (44) für die Aufnahme der in das/die Gewinde des/der Klemmplättchen (48) eingreifende/n Schraube/n (50) aufweist.

7. Verbindung gemäss Anspruch 6, dadurch gekennzeichnet, dass die verbindungsseitigen Abschlussflächen (64) des Verbindungselementes (60) eine zur Biegung des Eckwinkels (40) korrelativ kongruente Form aufweisen.

8. Verbindung gemäss Anspruch 1, dadurch gekennzeichnet, dass das Verbindungselement (60) als U-förmiges Längsprofil ausgebildet ist.

9. Verbindung gemäss Anspruch 1, dadurch gekennzeichnet, dass das Verbindungselement (60) am Boden (61) eine in die hinterschnittene Nut (24) des zweiten Längsprofils (22) einführbare federförmige Anformung (67) aufweist.

10. Verbindung gemäss Anspruch 1, dadurch gekennzeichnet, dass das Verbindungselement (60) an beiden wandseitigen Abschlussflächen (66) eine Nut (69) aufweist, so dass das Verbindungselement (60) mit seinen Nuten (69) auf die durch die hinterschnittene Nut (24) des zweiten Längsprofils (22) gebildeten Profillappen (28) aufgeschoben werden kann.

11. Verbindung gemäss Anspruch 1, dadurch gekennzeichnet, dass das Verbindungselement (60) an seinen wandseitigen Abschlussflächen (66) lappenartige Anformungen (68) aufweist.

12. Verbindung gemäss Anspruch 1, dadurch gekennzeichnet, dass das Verbindungselement (60) an einer wandseitigen Abschlussfläche (66) eine wulstförmige Anformung (70) und auf der gegenüberliegenden wandseitigen Abschlussfläche (66) eine angeformte Supportkonsole (72) aufweist.

13. Verfahren zur Herstellung einer Verbindung von zwei in einem Winkel stehenden Längsprofilen (10,22) gemäss Anspruch 1, dadurch gekennzeichnet, dass ein Verbindungselement (60) in die nutartige Vertiefung (34) des zweiten Längsprofils (22) eingeführt und an der vorgesehenen Montageposition des zweiten Längsprofils (22) positioniert wird, der/die Eckwinkel (40) in die nutartige Vertiefung (34) des zweiten Längsprofils (22) eingeschoben und provisorisch fixiert wird/werden, die ganze so vorbereitete Verbindung mit einer Verbindungsmasse (54) versehen wird und das erste Längsprofil (10) in die frei liegenden Schenkel (42) des/der provisorisch fixierten Eckwinkel (40) eingeschoben und der/die Eckwinkel (40) durch Festziehen der Klemm-Schraubverbindungen trennfest mit den zu verbindenden Längsprofilen (10,22) verbunden wird.

14. Verwendung der Verbindung gemäss Anspruch 1 für den Zusammenbau von aus Längsprofilen (10,22) aufgebauten Gerippestrukturen für Wagenkasten von Schienen-oder Strassenfahrzeugen oder für den Zusammenbau von aus Längsprofilen zusammengesetzten Aufbauten und Führerkabinen für Krane, Landwirtschafts- oder Kommunalfahrzeuge.

## Claims

1. Connection between two longitudinal profiles (10, 22) at an angle to one another each having two connecting sides (12) and two wall sides (24), in which at least one connecting side (12) of each longitudinal profile (10, 22) has a groove (24) undercut on either side, with shaped tabs (28) and a moulded-on longitudinal flange (30) on either side of the undercut groove (24) so that a groove-shaped recess (34) is formed between the two longitudinal flanges (30), and the end face of the first longitudinal profile (10) is directed towards one connecting side (12) of the second longitudinal profile (22), and the longitudinal profiles (10, 22) are secured together by means of at least one corner angle (40) mounted between the corresponding connecting sides (12) of the longitudinal profiles (10, 22), the corner angle (40) having two arms (42) at an angle to one another and each arm (42) of the corner angle (40) being introduced into the corresponding groove-shaped recess (34) in the longitudinal profiles (10, 22) connected together, characterised in that the first longitudinal profile (10) is provided on its end face (16) with an end recess (18) engaged by a connecting element (60) introduced into the groove-shaped recess (34) between the longitudinal flanges (30) of the second longitudinal profile (22), the connecting element (60) forming a positive connection together with the end recess (18).

2. Connection according to claim 1, characterised in that a sealing compound (54) is situated between the connecting element (60) and the end recess (18) of the first longitudinal profile (10) and/or between the connecting element (60) and the longitudinal flanges (30) of the second longitudinal profile (22) in order to seal the connection or design a precisely positive connection between the connecting element (60) and the end recess (18).

3. Connection according to claim 1, characterised in that the end flanges (20) provided on the wall side by the end recess (18) have a height of at least 2 mm and, in particular, between 2 and 5 mm.

4. Connection according to claim 1, characterised in that the height e of each end surface (66) of the connecting element (60) on the wall side is at least 1.5 mm, in particular 1.5 to 4.5 mm greater than the height of the corresponding longitudinal flange (30) of the second longitudinal profile (22).

5. Connection according to claim 1, characterised in that the top surface (63) of the connecting element (60) has a length c corresponding to the length of the end face of the first longitudinal profile (10).

6. Connection according to claim 1, characterised in that each arm (42) of the corner angle (40) is secured to the corresponding connecting sides (12) of the longitudinal profiles (10, 22) by means of at least one clamping screw connection, each screw (50) engaging in a thread of a clamping plate (48) which can be introduced from the front into the undercut groove (24) and each arm (42) of the corner angle (40) having at least one bore (44) for receiving the screw/s (50) engaging in the thread/s of the clamping plate/s (48).

7. Connection according to claim 6, characterised in that the end surfaces (64) of the connecting element (60) on the connecting side have a shape correlatively congruent with the bend of the corner angle (40).

8. Connection according to claim 1, characterised in that the connecting element (60) is in the form of a U-shaped longitudinal profile.

9. Connection according to claim 1, characterised in that the connecting element (60) is provided at the bottom (61) with a tongue-shaped moulded-on portion (67) which can be introduced into the undercut groove (24) in the second longitudinal profile (22).

10. Connection according to claim 1, characterised in that the connecting element (60) is provided on both end surfaces (66) on the wall side with a groove (69) so that the connecting element (60) can be slipped via its grooves (69) on to the shaped tabs (28) formed by the undercut groove (24) in the second longitudinal profile (22).

11. Connection according to claim 1, characterised in that the connecting element (60) is provided on its end surfaces (66) on the wall side with tab-shaped moulded-on portions (68).

12. Connection according to claim 1, characterised in that the connecting element (60) is provided on one end surface (66) on the wall side with a toric moulded-on portion (70) and on the opposite end surface (66) on the wall side with a moulded-on supporting bracket (72).

13. Method of producing a connection between two longitudinal profiles (10, 22) at an angle to one another according to claim 1, characterised in that a connecting element (60) is introduced into the groove-shaped recess (34) in the second longitudinal profile (22) and is positioned at the predetermined assembly position of the second longitudinal profile (22), the corner angle/s (40) is/are pushed into the groove-shaped recess (34) in the second longitudinal profile (22) and temporarily fixed, the entire connection prepared in this manner is provided with a sealing compound (54) and the first longitudinal profile (10) is pushed into the exposed arms (42) of the temporarily fixed corner angle/s (40) and the corner angle/s (40) is/are permanently connected to the longitudinal profiles (10, 22) to be connected by tightening the clamping screw connections.

14. Use of the connection according to claim 1 for the assembly of framework structures for the bodies of rail or road vehicles made up of longitudinal profiles (10, 22) or for the assembly of superstructures and driver's cabs for cranes, agricultural vehicles or municipal vehicles composed of longitudinal profiles.

## Revendications

1. Dispositif de jonction pour deux profilés allongés (10, 22) disposés sous un angle et comportant chacun deux côtés de jonction (12) et deux côtés de parois (14), l'un au moins des côtés de jonction (12) de chaque profilé allongé (10, 22) comportant une gorge (24) en contre-dépouille des deux côtés avec des pattes de profilés (28), et une bride longitudinale en relief (30) des deux côtés de la gorge (24) en contre-dépouille, de sorte qu'il se forme un renfoncement en forme de rainure (34) entre les deux brides longitudinales (30), et le côté frontal du premier profilé allongé (10) étant dirigé contre un côté de jonction (12) du second profilé allongé (22), et les profilés allongés (10, 22) étant fixés l'un à l'autre à l'aide d'au moins une équerre d'angle (44) montée entre les côtés de jonction correspondants (12) des profilés allongés (10, 22), l'équerre d'angle (40) comportant deux bras (42) disposés sous un angle, et chaque bras (42) de l'équerre d'angle (40) étant introduit dans le renfoncement correspondant en rainure (34) des profilés allongés (10, 22) reliés l'un à l'autre,
caractérisé en ce que
le premier profilé allongé (10) présente sur sa surface frontale (16) un évidement frontal (18), et en ce qu'un élément de jonction (60), introduit dans le renfoncement en rainure (34) entre les brides longitudinales (30) du second profilé allongé (22), s'engage dans cet évidement, et l'élément de jonction (60) forme une jonction à coopération de formes conjointement avec l'évidement frontal (18).

2. Dispositif de jonction selon la revendication 1, caractérisé en ce qu'il est prévu entre l'élément de jonction (60) et l'évidement frontal (18) du premier profilé allongé (10) et/ou entre l'élément de jonction (60) et les brides longitudinales (30) du second profilé allongé (22) une masse de jonction (54) pour étancher la jonction ou pour réaliser une jonction à coopération de formes exacte entre l'élément de jonction (60) et l'évidement frontal (18).

3. Dispositif de jonction selon la revendication 1, caractérisé en ce que les brides frontales (20) réalisées du côté paroi à cause de l'évidement frontal (18) présentent une hauteur d'au moins 2 mm et en particulier entre 2 et 5 mm.

4. Dispositif de jonction selon la revendication 1, caractérisé en ce que la hauteur e de chaque surface de terminaison côté paroi (66) de l'élément de jonction (60) est supérieure d'au moins 1,5 mm et en particulier de 1,5 à 4,5 mm, à la hauteur de la bride longitudinale correspondante (30) du second profilé allongé (22).

5. Dispositif de jonction selon la revendication 1, caractérisé en ce que la surface supérieure (63) de l'élément de jonction (60) présente une longueur c qui correspond à la longueur de la surface frontale du premier profilé allongé (10).

6. Dispositif de jonction selon la revendication 1, caractérisé en ce que chaque bras (42) de l'équerre d'angle (40) est fixé sur les côtés de jonction correspondants (12) des profilés allongés (10, 22) par au moins une liaison par serrage/vissage, et en ce que chaque vis (50) s'engage dans une plaquette de serrage (48) susceptible d'être introduite depuis l'avant dans la gorge (24) en contre-dépouille, et chaque bras (42) de l'équerre d'angle (40) comporte au moins un perçage (44) pour recevoir la ou les vis (50) qui s'engage(nt) dans le ou les taraudages de la ou des plaquettes de serrage (48).

7. Dispositif de jonction selon la revendication 6, caractérisé en ce que les surfaces de terminaison côté jonction (64) de l'élément de jonction (60) présentent une forme en corrélation avec la flexion de l'équerre d'angle (40).

8. Dispositif de jonction selon la revendication 1, caractérisé en ce que l'élément de jonction (60) est réalisé sous la forme d'un profilé allongé en forme de U.

9. Dispositif de jonction selon la revendication 1, caractérisé en ce que l'élément de jonction (60) comporte dans le fond (61) un relief en forme de languette (67) susceptible d'être introduit dans la gorge (24) en contre-dépouille du second profilé allongé (22).

10. Dispositif de jonction selon la revendication 1, caractérisé en ce que l'élément de jonction (60) comporte sur les deux surfaces de terminaison côté paroi (66) une gorge (69), de sorte que l'élément de jonction (60) peut être coiffé au moyen de ses gorges (69) sur les pattes de profilés (28) formées par la gorge (24) en contre-dépouille du second profilé allongé (22).

11. Dispositif de jonction selon la revendication 1, caractérisé en ce que l'élément de jonction (60) comporte des reliefs en forme de pattes (68) sur ses surfaces de terminaison côté paroi (66).

12. Dispositif de jonction selon la revendication 1, caractérisé en ce que l'élément de jonction (60) comporte sur l'une des surfaces de terminaison côté paroi (66) un relief en forme de bourrelet (70) et sur la surface de terminaison côté paroi opposée (66) une console de support en relief (72).

13. Procédé pour établir une jonction entre deux profilés allongés (10, 22) disposés sous un angle, selon la revendication 1, caractérisé en ce que l'on introduit un élément de jonction (60) dans le renfoncement en rainure (34) du second profilé allongé (22) et on le positionne à la position de montage prévue sur le second profilé allongé (22), en ce que l'on introduit la/les équerres d'angle (40) dans le renfoncement en rainure (34) du second profilé allongé (22) et on la/les fixe provisoirement, l'on pourvoit la totalité de la jonction ainsi préparée d'une masse de jonction (54), et l'on introduit le premier profilé allongé (10) dans le bras libre (42) de la/des équerres d'angle (40) fixée(s) provisoirement, et l'on relie d'une manière solidaire avec les profilés allongés à relier (10, 22) la/les équerres d'angle (40) en serrant les liaisons par serrage/vissage.

14. Application du dispositif de jonction selon la revendication 1 à l'assemblage de structures d'ossature réalisées à partir de profilés allongés (10, 22) pour des caisses de wagons ou de voitures de véhicules ferroviaires ou routiers, ou pour l'assemblage de structures et de cabines de conduite composées de profilés allongés pour des grues, des véhicules agricoles ou des véhicules communaux.
